# EUROPEAN PATENT APPLICATION

(11) **EP 2 144 396 A1**
(43) Date of publication of application: **13.01.2010**
(21) Application number: 08012212.0
(22) Date of filing: 07.07.2008
(51) Int. Cl.: H04L 12/18

(54) **System and method for providing one-to-one interactive communication services between mobile users in close proximity**

(71) Applicant: Sonmez, Fazil Rifat, Istanbul 34349 (TR)
(72) Inventor: Sonmez, Fazil Rifat, Istanbul 34349 (TR)
(74) Representative: Ünal Ersönmez, Ayse

(57) **Abstract**

**Summary of the Invention**

System and method for providing one-to-one interactive communication services between mobile users in close proximity

In the present invention, the SMS protocol is used in conjunction with the SMS-CB protocol and the IN system in order to provide an enabler of multiple one-to-one SMS chat and/or voice/video communication services for close proximity, as defined by the wireless operator/service provider. This is carried out by requiring only SMS writing capabilities and basic handsets without additional programming on the mobile user side; and it does not necessitate expensive location server systems nor does it generate load for the wireless network on the service provider side.

## Description

### Background and Current State in the Field of the Invention

Wireless telephone networks (GSM, 3G), which will be referred to as wireless networks in this document, have two major types of messaging capabilities: SMS Point-to-Point (SMS-PP or SMS) and SMS Cell Broadcast (SMS-CB). SMS, a two-way system, is best suited for one-to-one communications. Mobile users send MO-SMS (Mobile Originated SMS) using their wireless terminals, which goes to the Short Message Service Center (SMSC) of their wireless network, handling all the MO-SMS traffic. After checking the destination number (MS-ISDN), SMSC sends the message as an MT-SMS (Mobile Terminated SMS) to the recipient. Messages have Status Report Indication flags, allowing the sending mobile user to be notified about the delivery status. SMSC processes all SMS requests individually. On the other hand, SMS-CB protocol allows the sending of the same message at the same time to all mobile users in a geographical area, ranging from one cell to the whole wireless network. While this is powerful, SMS-CB, carried out by the Cell Broadcast Center (CBC), has no message return path, thus no delivery status capability. More on the basic characteristics of both messaging systems can be found in GSM 03.40, GSM 03.41 and related documents and their 3G counterparts. Only the details of these, which are specific to the present invention, will be mentioned in the rest of this patent application.

Short Codes for dialing are defined as n-digit numbers (generally 4-digit) and are widely used in Voice Mail access, corporate VPN (Virtual Private Network), customer care access. In the corporate VPN example, every mobile user of the corporation is assigned a Short Code, in addition to his/her wireless telephone number (MS-ISDN). Short Codes are known by co-workers and when dialing each other they use the corresponding Short Codes, instead of dialing the long MS-ISDN numbers. In the wireless networks, this functionality is generally handled by a system node called IN (Intelligent Network). In order to carry out its function, IN communicates with the MSC (Mobile Switching Center), which handles all the switching activities in the wireless network

Short Codes for SMS are defined as n-digit numbers (generally 4- or 5-digit) and are widely used in SMS services. The most common example is logo/ringtone requests, where the mobile user sends an MO-SMS containing the logo/ringtone ID in the message body to the Short Code designated for the service. The logo/ringtone service communicating with the SMSC gets the message body and returns back the desired logo/ringtone to the SMSC, which delivers it to the wireless terminal via an MT-SMS. The same service can be carried out using an MS-ISDN number as well, instead of a Short Code. They can be called collectively as a Service Number, for which the present invention applies.

Known as Info Channels, or Cell Broadcast, on the wireless terminal menus, SMS-CB messages can be received by selecting and enabling channels for reception. One advantage of SMS-CB is that it requires the mobile user's consent: unless enabled to receive, a wireless terminal will receive no SMS-CB message. There are a total of 65,535 channels, of which the mobile user can enable 999. The scope of the present invention encompasses all of the channels, but examples will relate to consumer-enabled cases.

WAP (Wireless Application Protocol) is a standard designed to give wireless terminals the capability of performing functions similar to ones available on desktop computers and notebooks. For various reasons, such as wireless terminal screen, processing power, bandwidth, the user experience is much more limited, but can be accessed anywhere in the coverage area. WAP is available on most wireless terminals.

SIM cards inside wireless terminals are powerful tools that might facilitate the mobile user activity involved with the present invention. By using a SIM card application, an wireless operator can seriously reduce the burden of the handset interaction of the mobile user. Furthermore, SIM cards with an application inside them, targeted to the use of the present invention, can be used to receive and manipulate SMS-CB messages beyond channels 999.

There are a number of similar patents in the field of the present invention:
US Patent application by Jean-Francois HOUPLAIN (App. No. 09/881,845) puts in place a technique that receives SMS-MO messages from mobile users to Service Numbers, checks against subscription database, uses location servers to locate the user and submits the message to CBC for cell broadcast.
European Patent 1 181 833 B1 by Ville JARVINEN and Timo FLINKKILA puts a technique requiring mobile user side programming accomplished on the wireless terminal to enable chat line or notice board service

### Problems Solved through the invention

What the present invention accomplishes is to eliminate the defects of the state of the art and for this purpose crests an entirely new one-to-one communication method for mobile users, in a way that has never been previously contemplated.

The shortcoming of the state of the art is that it does not provide a location verification without recourse to extra programming, expensive hardware on the mobile user side or location server capabilities on the wireless operator side.

In the present invention, the mobile users declare their own location information. No location server is required. Even if such server was available from the wireless operator, the mobile user would be required to give its consent, an additional burden. In the present method, the consent is given by way of sending an SMS. The verification of the location information is made in an out-of-band way.

No additional programming on the mobile user side is required. The mobile user does not have to have a programmed wireless terminal nor a SIM card. He/she is the one who types the necessary commands and messages on the wireless terminal.

Participation to the service is totally voluntary and requires no cumbersome subscription process Disabling Cell Broadcast service will end all broadcast messaging activity. ID numbers can be temporarily assigned to make the parties available for only a period of time. In any case, Block and SignOut messages are available to stop the communication activity immediately.

### Description of the Drawings

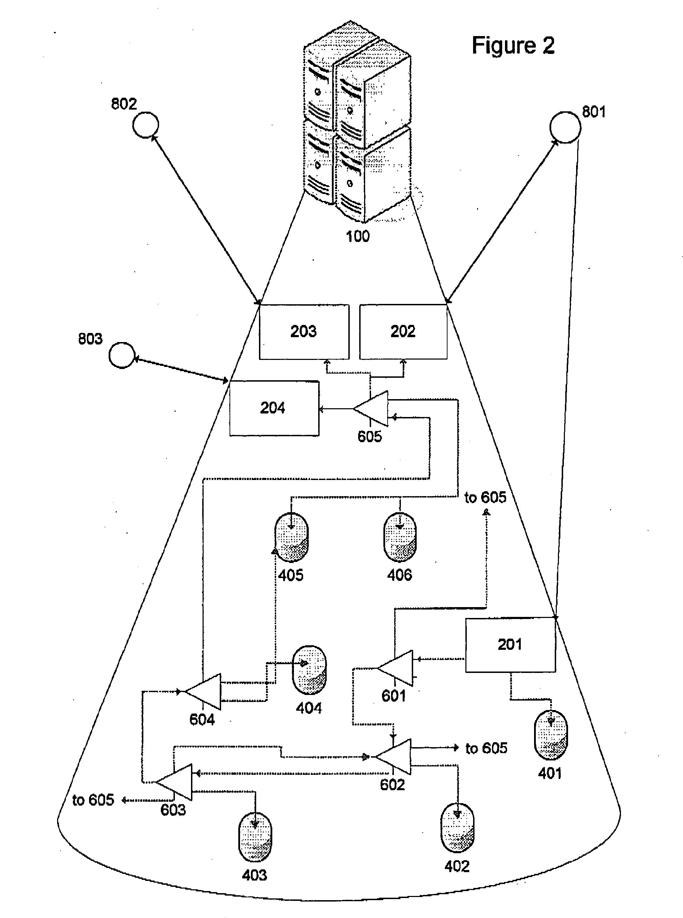

Below, a preferred embodiment of the present invention will be described with reference to the following drawings:

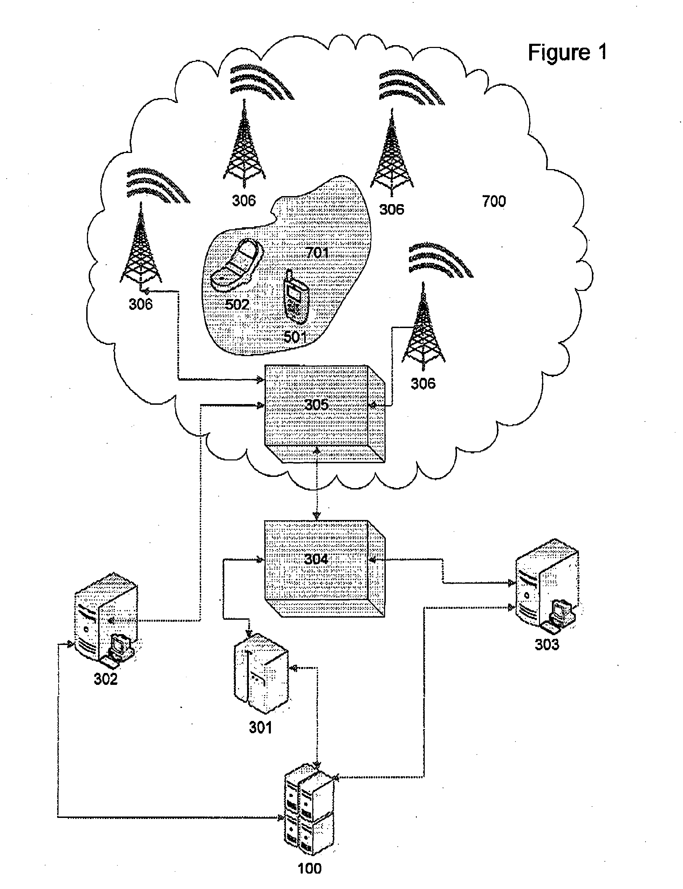

Figure 1 illustrates the nodes of a wireless telephone network relevant in supporting the preferred embodiment
   IN (301) drives the MSC (304), the Mobile switching Center, to handle Short Code dialing. CBC (302) manages the distribution of SMS-CB messages to designated areas of the wireless network. SMSC (303) receives and delivers SMS messages RNC/BSS or the Base Station System (305) interfaces between BTSs (306). Base Transmitting Station, and other components of the wireless network BTS (306) is the wireless network equipment delivering the services to the mobile user equipment via electromagnetic waves and is depicted in the Figure 1 with a communication tower symbol The total coverage area. (700) of the wireless network is shown as a large cloud. The close proximity area (701), as defined by the service provider, for the sample participants (501, 502) is shown inside the total coverage area (700). Computing System (100) is the component implementing the present invention through its connections to other elements of the wireless network and is depicted in more detail in Figure 2.
Fig. 2 illustrates the nodes inside the Computing System (100) important in supporting the preferred embodiment.
   Message Parsing function (201) breaks down the incoming MO-SMS message from the mobile users through the SMSC interface (801) into functional components and logs them along with the originating MS-ISDN into Message Database (401). Message Type Logic (601) analyzes the incoming message received and routes it according to its type and content. Blacklist Logic (602) checks if a message is to be rejected using its Blacklist Database (402), based on the originating and destination MS-ISDN numbers. Global Blacklist is based on the originating MS-ISDN number. Individual Blacklist is based on pairs of originating-destination MS-ISDN numbers, as one mobile user (501) may trigger the system to stop messages coming from another mobile user (502). Content Logic (603) checks if a message is to be rejected using its database (403), based on the content of the message. Location Logic (604) checks if a message is to be rejected using its Coverage Area database (404), based on the destination area of the broadcast request and the Customer Location database (405). Codes, Timer & Verification Logic (605), maintains Correspondence and Initiation Codes in its database (406), checks if a verification message is successful and accordingly updates Customer Location database (405). It also sends re-verification messages on predefined intervals using its internal Timer function.
   CTV Logic (605) sends MT-SMS messages using the SMS Compose Function (202) through the SMSC interface (801). CTV Logic (605) sends SMS-CB messages using the SMS-CB Compose Function (203) through the CBC interface (802). CTV Logic (605) triggers IN (301) using the IN Triggering Function (204) through the IN interface (803).
Fig. 3 illustrates a flowchart of operations related to the first Broadcast Request in realizing the preferred embodiment as explained in Detailed Description of the Invention
Fig. 4 illustrates a flowchart of operations related to the Correspond Request in realizing the preferred embodiment as explained in Detailed Description of the Invention

### Detailed Description of the Invention

The present invention relates to the field of communications. More particularly, the present invention relates to the use of wireless terminals in close proximity (as defined by the wireless operator/service provider) as one-to-one chat devices via SMS and/or voice/video calls. All references to "call" encompass voice and/or video calls. The name "service provider" may be used in this document where the provider of the service depicted in the present invention is provided by a third party using the wireless network. Until the mobile users mutually agree to leave the platform, which the present invention creates, and communicate using the plain capabilities of the wireless network, their identity (MS-ISDN number) will stay anonymous, replaced by Correspondence Codes. The location verification capability, preferably made in an out-of band manner, verifies that both mobile users are in the same geographical area. Minimal wireless network resources are used, mobile users need to have basic SMS writing/dialing/CB channel enabling skills and only basic wireless terminals are required.

In a preferred embodiment described below, a Computing System (100), which consists of the logic and the database elements, drives other components of the system inside the wireless network.

SMS messages are the pivotal components of the preferred embodiment Different types of SMS messages are shown in the below table, Table A.

**Table A**

| Code | Name | Type | Sent by | Sent to | Message Body |
|---|---|---|---|---|---|
| BroadReq | Broadcast Request | MO | Broadcast User | Service No. 1 | Loclnfo + Message |
| LocVerifReq | Location Verify Req. | MT | Computing System | Broadcast User1 | CorrCode1 |
| LocVerifCB | Location CB | CB | Computing System | Specified Loc. Ch.1 | CorrCode1 + InitCode |
| LocVerify | Location Verify Conf. | MO | Broadcast User1 | Service No. 2 | InitCode1 |
| Broadcast | Broadcast | CB | Computing System | Specified Loc. Ch. 2 | CorrCode1 + Message |
| | | | | | |
| ReBroadReq | ReBroadcast Request | MO | Broadcast User1 | Service No. 1 | Message2 |
| Broadcast | Broadcast | CB | Computing System | Specified Location | CorrCode1 + Message2 |
| | | | | | |
| ReVerifReq | Location Re-Verify Req. | MT | Computing System | Broadcast User1 | CorrCode1 |
| ReVerifCB | Location CB | CB | Computing System | Specified Loc. Ch. 1 | CorrCode1 + InitCode2 |
| ReVerifLoc | Location Re-Verify Conf. | MO | User | Service No. 2 | InitCode2 |
| | | | | | |
| Correspond Req. | Correspond Request | MO | Mobile User CorrCodeN | Service No. 3 | CorrCode1 + Message |
| Chat Message | Chat Message | MT | Computing System | Broadcast User1 | CorrCodeN + Message |
| | | | | | |
| BlockReq | Block Request | MO | Mobile User CorrCodeN | Service No. 4 | "Block" + CorrCode1 |
| Blocklnform | Block Inform | MT | Computing System | Mobile User1 | "Blocked 4" CorrCodeN |
| BlockConfirm | Block Confirm | MT | Computing System | Mobile UserN | CorrCode1 "Blocked" |
| | | | | | |
| GBlocklnfo | Global Block Inform | MT | Computing System | Mobile UserN | "You are Blocked" |
| | | | | | |
| SignOut | Sign out | MO | System UserM | Service No. 5 | "Sign me out" |
| SignOutConf | Sign out Confirm | MT | Computing System | Mobile UserM | "You are signed out" |

MO-SMS and MT-SMS messages can be replaced with WAP and WAP-Push transactions. However, the average mobile user is more used to SMS messages, for which billing concept is more widely understood by the mobile user and has better returns for the wireless operator.

For SMS-CB messages, preferably at least two channels are used in the preferred embodiment. One is for the broadcasting of mobile user messages, while the other is used for location verification purposes. Should the wireless operator decide to allocate different channels for mobile user messages, based on content, user profile or other, additional channels may be allocated. If only one channel is used, user messages and verification broadcasts will be mixed and may lower mobile user satisfaction.

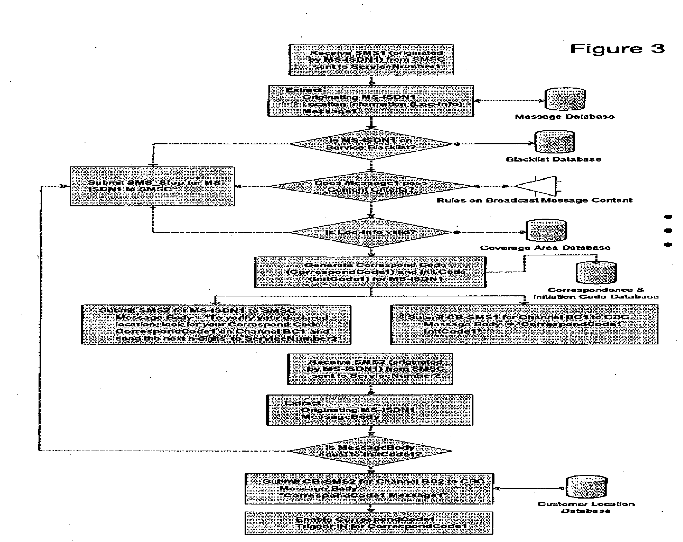

In particular, a mobile user (501) wishing to use the service of the present invention in communicating with some other in the neighborhood sends a text message in the MO-SMS protocol to a service number. This number can be an MS-ISDN or a Short Code, defined by the wireless operator/service provider. This message is just one of message types defined in Table A, Broadcast Request message. The related flow of operations is depicted in Figure 3. However, the number of the message types may increase with the requirements of the service provider and the demands of the customer base.

The message body typed on the screen of the wireless terminal is composed of two main components: Location Information and User Message. Location Information can be the name of the mall/street/highway he/she is in. User Message can be what type of subject he/she wants to chat about, what type of person he/she is, what type of person he/she wants to chat/meet. Once the MO-SMS is received from the SMSC Interface (801), these two components of the message are extracted by the Message Parsing Function (201) along with the MS-ISDN of the mobile user (501). All the information is logged into the Message Database (401).

The message is passed to the Message Type Logic (601), which carries out the distinction between different message types and errors. For an error-free Broadcast Request message, the flow is routed to Blacklist Logic (602) where Black List check is based on the originating MS-ISDN numbers against Blacklist Database (402). The number is checked against any previous misuse of the platform that might reduce the general public's interest in using it.

If the Black List test is passed, User Message is checked by the Content Logic (603) based on the preset criteria for content stored in Content Database (403). Any unethical words/expressions/meanings may cause the message to be discarded, as it will be distributed to a possibly large number of mobile users in CB reception mode.

The third check is the meaningfulness of Location Information carried out by the Location Logic (604). The wireless operator/service provider may choose to enable the service only for some specific areas and not the whole coverage area. Furthermore, it may limit it only to malls, for example. The incoming Location Information is checked against the service area and Coverage Database (404). Additionally, the most recent location in the Customer Location Database (405) is checked for the last verified location of the mobile user. Any mistyping may be corrected based on the closest match, as setup by the wireless operator/service provider. The result of the operation by the Location Logic (604) is the area of broadcast, in other words the cells in the wireless network to which the broadcast is to be made and is based on the location information supplied by the mobile user (501).

If all checks are passed, a Correspondence Code and an Initiation Code are generated for the mobile user (501) by the Codes, Timer & Verification (CTV) Logic (605) and are logged in the Correspondence & Initiation Codes Database (406). An MT-SMS containing the Correspondence Code and asking for the Initiation Code is sent to the mobile user (501) through SMS Compose function (202), which is routed to the SMSC interface (801). When the delivery of this MT-SMS is received via the SMSC Interface (801), the Initiation Code together with Correspondence Code is forwarded to the CBC (302) which broadcasts them on a specific CB channel, Verification Channel. This is carried out by SMS-CB Compose function (203) through the CBC Interface (802). The area of broadcast (701) is the information passed by the Location Logic (604) to CTV Logic (605).

If he/she is in this area of broadcast (701), the mobile user (501) sees his/her own Correspondence Code in the SMS-CB message broadcast through the Verification Channel and sends back the Initiation Code via a second MO-SMS to a specific number, which can be an MS-ISDN or a Short Code, defined by the wireless operator/service provider. The message, passes through (801) is routed by the Message Type Logic (601) to CTV Logic (605). If the code sent by the mobile user (501) matches the one generated by the system, the Correspondence Code in the database (406) is enabled, the User Message is broadcast on the Chat CB channel together with the Correspondence Code by the CBC Compose function (203) through CBC Interface (802). If the length of the User Message plus the Correspondence Code is longer than 93 characters, which is the limit for an SMS-CB message, CBC Compose function (203) concatenates it to multiple SMS-CB messages. IN is triggered by IN Triggering function (204) through IN Interface (803) to add Correspondence Code - MS-ISDN pair. The Customer Location database (405) is updated to locate the mobile user at the declared location and a timer is started to request location re-verification.

Any mobile user having enabled their Cell Broadcast channel, on which the above SMS-CB is broadcast, can see the User Message with its Correspondence Code and send an SMS to or make a voice/video call to the person. To make a call the Corresponding User (502) has to dial the Correspondence Code he/she sees in the SMS-CB message. If messaging is chosen as the medium of communication, the Correspond Request message cycle is as follows:

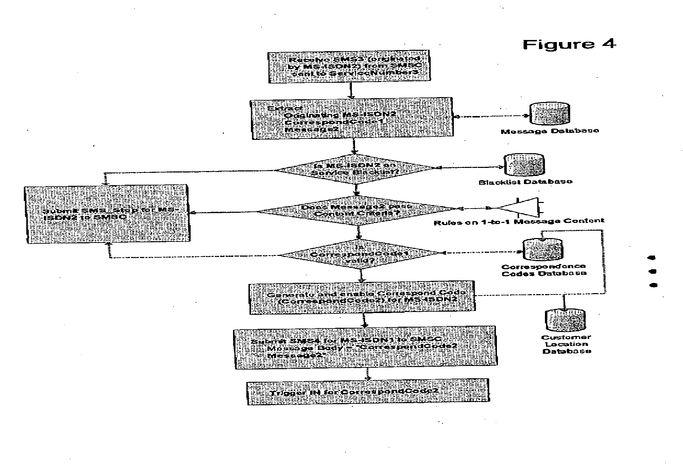

The Corresponding User (502) sends an MO-SMS containing the Correspondence Code of the Broadcasting User (501), which is visible on the SMS-CB, and a one-to-one message content. The related flow of operations is depicted in Figure 4. Another method is sending the one-to-one message content directly to the Correspondence Code. If the Blacklist Logic (602) does not block it based on the MS-ISDN of the Corresponding User (502) and the Content Logic (603) does not block it based on the one-to-one content rules, the message is routed to the Location Logic.

In the Location Logic (604), based on the system setup of the wireless operator, two different flows exist: One assumes the knowledge of the Correspondence Code of the Broadcasting User (501) verifies that Corresponding User (502) is in the close proximity, as the code is only available by SMS-CB targeted to that area (701). The other flow requires a location verification procedure for Corresponding User (502), same as the one depicted above for the Broadcasting User (501).

Upon receiving the message from the Location Logic (604), the CTV Logic (605) checks the timer for the Broadcasting User (501). It logs the Corresponding User (502) in the Customer Location Database (405) and its generated Correspondence Code2 in Codes Database (406). Finally, it sends his/her message together with the Correspondence Code2 to the Broadcasting User (501) through SMS Compose function (202) and triggers IN for the Corresponding User (502) through IN Triggering function (204) through their respective interfaces (801, 803).

All MS-ISDN numbers or Short Codes to which mobile users send their various SMS messages are managed by the service provider. Mentioned in the Table A, they can be unified for easier end-user experience, provided that the mobile user is well instructed to put enough information into the message and/or the logic in the Computing System is arranged to handle between different messages. When unified, they require more parsing and processing on both the mobile user and the service provider.

The service may require the mobile users to verify their location on selected time intervals. ReVerif-type SMS and SMS-CB messages are sent and received to verify that the mobile users using the system are at the same place where they started to use the service. The service may be configured to deny the service beyond a period if no verification is received.

There may be two types of blocking actions in the system. One is one-to-one block where a mobile user wants to stop messages coming from another specific mobile user. The request is logged, notified to the second mobile user and confirmed to the mobile user who requested it, after being logged into the Blacklist Database (402). The second blocking action is global blocking where a mobile user is denied service from the system, based on the logic of the service provider. The logic may include breach of good manners, sex-race discrimination in message content. The Blacklist Database (402) is updated to include the blocked mobile user.

Another message of the system is the Sign Out message. The mobile user may want to end the service until a second request to sign up. It only contains the command defined by the service provider.

A preferred method would be to use different channels for different SMS-CB messages, meaning user message broadcasts and location-verification broadcasts. The verification channel will serve all the mobile users of different services of the present invention, while the user message broadcast channel(s) can grow in numbers, one for youth chat, one for soccer chat, one for taxi-rider search.

### Applications of the Invention

Two immediate potential applications of the present invention are:
Chat for youth. Young people looking for opportunities to make new friends in shopping malls and youth activity areas can use the service delivered by the present invention. The attraction of the service is that it provides anonymity, it is location-based and is especially easy to learn and use for the youngsters.
Facilitation of taxi-rider pairing. In cities, where there are no established taxi companies, the taxi-rider allocation is far from being optimal. The present invention will facilitate this matching operation.

## Claims

1. A method for transmitting a message in a communication service operating by means of a wireless telephone network, in which service, a temporary specific correspondence code, intended to conceal the identity of the mobile user, is allocated to each mobile user (501, 502) joining the service, and, in which method:
- a content message addressed to a Broadcast Area (701), comprising one or more cells of the wireless telephone network is received from a first mobile user (501),
- the said mobile user who has sent the message is identified,
- the mobile user is checked against a blacklist,
- the message is checked against a content criteria,
- the area addressed is checked against a location database,
- the anonymous correspondence code and related initiation code for the mobile user are generated,
- the location verification message containing the correspondence code is sent to the mobile user asking for the initiation code,
- upon the delivery of the aforementioned message the correspondence code and the initiation code are broadcast to the area (701) in a paired format
- upon the reception of the initiation code from the mobile user (501), his/her initial content message is forwarded in broadcast mode to the area (701)
- upon the reception of a one-to-one message by at least one second mobile user (502) intended to the first mobile user (501)
- the mobile user (502) who has sent the aforementioned message is identified,
- the mobile user (502) is checked against a blacklist,
- the message is checked against a content criteria,
- if nonexistent, the anonymous correspondence code for the mobile user (502) is generated via which the chat can continue anonymously,
- the message is forwarded to the mobile user (501) along with his/her correspondence code.

2. A method according to Claim 1, **characterized in that**
- an identifier of the mobile telephone network for the area (701) or a reasonable description of the area (701) declared by the first mobile user (501) when sending the message is verified and recorded,
- the destination area (701) is defined on the basis of the wireless telephone network cells defined in the message.

3. A method according to Claim 1 and 2, **characterized in that**
- a call-connection request, directed to the possessor of the correspondence code attached to a message received by at least one other mobile user (502), is received, and
- the call is connected to the mobile telephone of the first mobile user (501), who possesses the correspondence code.

4. A method according to Claim 3, **characterized in that**, when connecting the call to the first mobile user (501), the correspondence code of the other mobile user (502), who is making the call, is transmitted to the first mobile user (501), along with the call.

5. A method according to one of Claims 1 - 4, **characterized in that**, when the call is being connected to the first mobile user (501), the destination telephone number is determined in an IN system (301).

6. A method according to one of Claims 1 - 5, **characterized in that** the communications service is a localized chat line, implemented with the basic services available on wireless telephone networks.

7. A method according to one of Claims 1-5, **characterized in that** the communications service is a localized notice-board service, implemented with the basic services available on wireless telephone networks.
